# EUROPÄISCHE PATENTSCHRIFT

(11) **EP 0 422 530 B1**
(45) Veröffentlichungstag und Bekanntmachung des Hinweises auf die Patenterteilung: **15.09.1993**
(21) Anmeldenummer: 90119195.7
(22) Anmeldetag: 05.10.1990
(51) Int. Cl.: G01B 5/00

(54) **Tastkopf für Koordinatenmessgeräte**
Feeler-head for coordinate-measuring machines
Tête de palpeur pour machines de mesure de coordonnées

(30) Priorität: 12.10.1989 DE 3934056
(43) Veröffentlichungstag der Anmeldung: 17.04.1991
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Enderle, Eckhard, W-7080 Aalen-Dewangen (DE); Aehnelt, Peter, W-7082 Oberkochen (DE)

(56) Entgegenhaltungen:
- EP-A- 0 351 714
- DE-U- 8 903 343
- US-A- 4 763 417

## Beschreibung

Die Erfindung betrifft einen Tastkopf für z.B. Koordinatenmeßgeräte mit einem den Taststift tragenden Teil, das über mehrere Führungen in allen Raumrichtungen beweglich gelagert ist und dem Meßsysteme zur Erfassung der Auslenkbewegung zugeordnet sind.

Derartige Tastköpfe vom "messenden" Typ erlauben es, die Relativbewegung des Taststiftes relativ zum Gehäuse auch während der Auslenkbewegung, d.h. im angetasteten Zustand zu erkennen, so daß der Rechner des Koordinatenmeßgerätes den Betrag der Auslenkung zu den von den Maßstäben der Meßmaschine gelieferten Positionsmeßwerten hinzuaddieren und somit die Lage der Tastkugel im Meßvolumen des Gerätes zu jedem Zeitpunkt bestimmen kann. Diese Tastköpfe eignen sich deshalb insbesondere für sogenannte Scanning-Verfahren, wobei das zu vermessende Werkstück durch den im dauernden Kontakt an seiner Oberfläche entlang gleitenden Taststift abgetastet wird.

Im Gegensatz zu den Tastköpfen vom "schaltenden" Typ, die nur im Moment der ersten Berührung mit dem Werkstück ein Triggersignal liefern, besitzen "messende" Tastköpfe deshalb in der Regel mindestens drei Linearmeßsysteme in Form von z.B. Tauchspulen oder photoelektrisch abgetasteten Maßstäben, die den Führungen zugeordnet sind, längs derer der Taststift beweglich gelagert ist.

Die Führungen bekannter Tastköpfe vom messenden Typ sind in der Regel wie die des Koordinatenmeßgerätes selbst entlang den Achsen eines kartesischen Koordinatensystems ausgerichtet und aufeinander gebaut, d.h. die x-Führung trägt die y-Führung, auf die dann wiederum die z-Führung aufgesetzt ist. Ein derartiger Tastkopf ist beispielsweise in der US-PS 3 869 799 beschrieben. Dort sind die Führungen als aneinander angebaute Federparallelogramme ausgeführt. Einen prinzipiell ganz ähnlichen Aufbau besitzt auch der in der US-PS 46 11 403 beschriebene Tastkopf, bei dem jedoch die Führungen durch Luftlager zwischen den aufeinander gleitenden Teilen reibungsfrei gemacht sind.

Bedingt durch den beschriebenen Aufbau sind die beweglichen Massen in den einzelnen Koordinatenrichtungen unterschiedlich groß, denn mindestens eine der Führungen muß ja die Führungsteile für die beiden anderen Koordinatenrichtungen mittragen. Dementsprechend ist auch das dynamische Verhalten in den einzelnen Achsen sehr unterschiedlich, so daß insbesondere im schnellen Scanning-Betrieb unterschiedliche Kräfte zwischen Taststift und Werkstück auftreten. Durch diese Meßkraftschwankungen wird die Meßgenauigkeit beeinträchtigt.

In der DE-PS 32 34 471 ist ein Tastkopf beschrieben, dessen Taststift bezüglich zweier Koordinatenrichtungen über eine ebene Führung mit zwei Freiheitsgraden beweglich gelagert ist. Auch hier ist jedoch die dritte Führung in der Richtung senkrecht zur genannten Ebene auf die ebene Führung aufgesetzt, so daß sich wieder unterschiedliche bewegliche Massen in einzelnen Führungsrichtungen ergeben. Außerdem benötigt dieser Tastkopf eine zusätzliche Torsionssicherung, um ein undefiniertes Verdrehen von außeraxialen Taststiften in der Ebene der Führung mit zwei Freiheitsgraden auszuschließen. Da diese Torsionssicherung die Meßgenauigkeit mitbestimmt und deshalb ebenfalls sehr präzise ausgeführt sein muß, bedeutet dies einen zusätzlichen, nicht unerheblichen Aufwand.

Es ist die Aufgabe der vorliegenden Erfindung, einen Tastkopf vom messenden Typ zu schaffen, der bezüglich aller Auslenkrichtungen im wesentlichen die gleiche, möglichst kleine bewegte Masse aufweist.

Diese Aufgabe wird gemäß den im Anspruch 1 angegebenen Merkmalen dadurch gelöst, daß das bewegliche Teil mittelbar auf mindestens drei unabhängig voneinander linear geführten Zwischenkörpern beweglich gelagert ist.

Gemäß der Erfindung werden die Führungen also nicht aufeinander gelegt, sondern es sind drei oder vier sozusagen "nebengeordnete" Hilfsführungen vorgesehen, so daß sich ein insgesamt völlig symmetrischer Aufbau mit gleichen bewegten Massen für alle Auslenkbewegungen realisieren läßt. Die Richtungen der Hilfsführungen fallen dementsprechend auch nicht notwendigerweise mit den drei Raumrichtungen eines orthogonalen Koordinatensystems zusammen, sondern können vorteilhaft parallel zueinander angeordnet werden, so daß sich ein kompakter, schlanker Aufbau für den Tastkopf ergibt.

Aufgrund des symmetrischen Aufbaus ist es außerdem möglich, sehr viele gleiche Teile zu verwenden, was die Herstellung vereinfacht und den Tastkopf preiswerter macht.

Die Lagerung, über die das bewegliche Teil des Tastkopfes auf den linear geführten Zwischenkörpern mittelbar aufliegt, ist so auszuführen, daß sich die Position des beweglichen Teils bei allen Verstellbewegungen eindeutig einer bestimmten Position der Zwischenkörper zuordnen läßt. Dann ist es nämlich sehr einfach möglich, die aktiven Teile der Meßsysteme im Gehäuse des Tastkopfes feststehend so anzuordnen, daß sie die Bewegung der Zwischenkörper erfassen und daraus die Lage des Taststifts zu berechnen.

Für die Lagerung des beweglichen Teils des Tastkopfes sind zweckmäßig drei winklig zueinander ausgerichtete, ebene Flächen am beweglichen Teil vorgesehen, mit denen es entlang entsprechender Gegenflächen an jedem Zwischenkörper geführt ist. Diese Führungsflächen können dann ebenso wie die Linearführungen für die Zwischenkörper am gehäusefesten Teil durch Gas- bzw. Luftlager reibungsfrei gemacht werden. Es ist jedoch auch möglich, das bewegliche Teil über jeweils zwei Berührpunkte an den drei linear geführten Zwischenkörpern zu lagern. Durch diese insgesamt sechs Berührpunkte ist die Lage des beweglichen Teils des Tastkopfes ebenfalls immer eindeutig bestimmt und die Reibung läßt sich auf jeden Fall dadurch stark vermindern, daß die Berührpunkte als z.B. zwischen Flächen rollende Kugeln ausgeführt sind.

Die Qualität der Führung des beweglichen Teils an den Zwischenkörpern ist von der Vorspannkraft abhängig, mit dem die Teile aneinander liegen. Soweit diese Vorspannung nicht durch die Lagerung des bewegliches Teils auf den Zwischenkörpern selbst erzeugt wird, was beispielsweise sogenannte selbstansaugende Luftlager ermöglichen, ist ein weiteres Lager für das bewegliche Teil des Tastkopfes vorzusehen, welches zur Vorspannung der mindestens drei Lager zwischen dem beweglichen Teil und den Zwischenkörpern dient. Hier kann es besonders vorteilhaft sein, die Vorspannung der ersten mindestens drei Lager durch eine gleiche Anzahl weiterer Lager zu erzeugen, wobei die weiteren Lager durch entsprechende Flächen am beweglichen Teil des Tastkopfes gebildet sind, die zu den Flächen der ersten Lager parallel sind. Es läßt sich dann die Höhe der Vorspannkraft der Führungen unabhängig von der Meßkraft einstellen.

In vorteilhaften Ausführungsformen kann die Meßkraft auch aktiv über Kraftgeneratoren wie z.B. Druckluftkolben oder Tauchspulen aufgebracht werden, mit denen die Zwischenkörper angetrieben sind. Diese Art der aktiven Meßkraftaufschaltung erlaubt es auch, den Taststift in bestimmte Richtungen z.B. bei Bewegungen in Richtung auf das Werkstück vorauszulenken und damit den Freilauf zu erhöhen, sowie bestimmte Auslenkrichtungen nachgiebiger bzw. härter einzustellen, je nachdem in welche Richtung an der Oberfläche des zu vermessenden Werkstücks entlanggescannt wird.

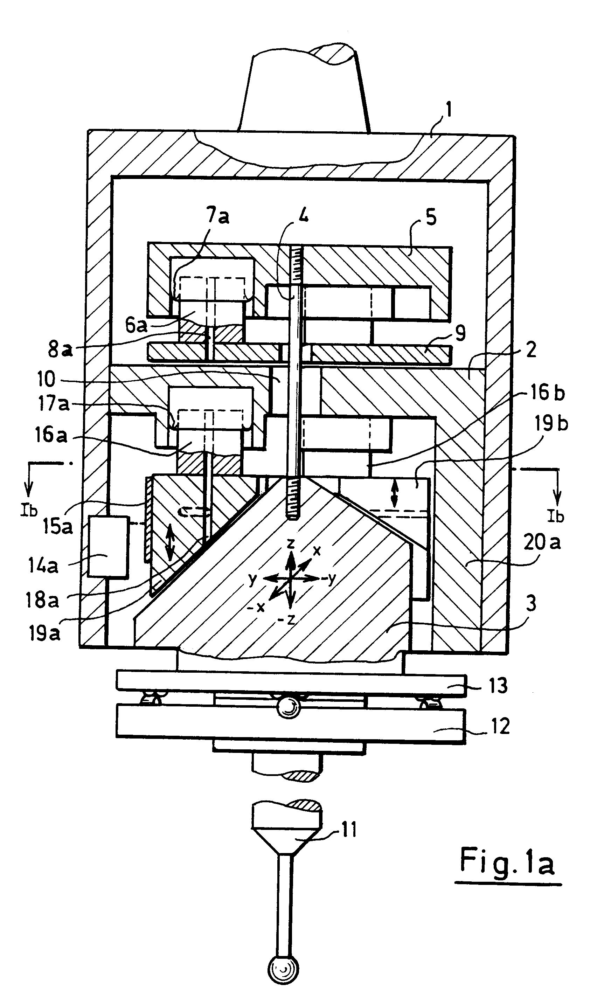

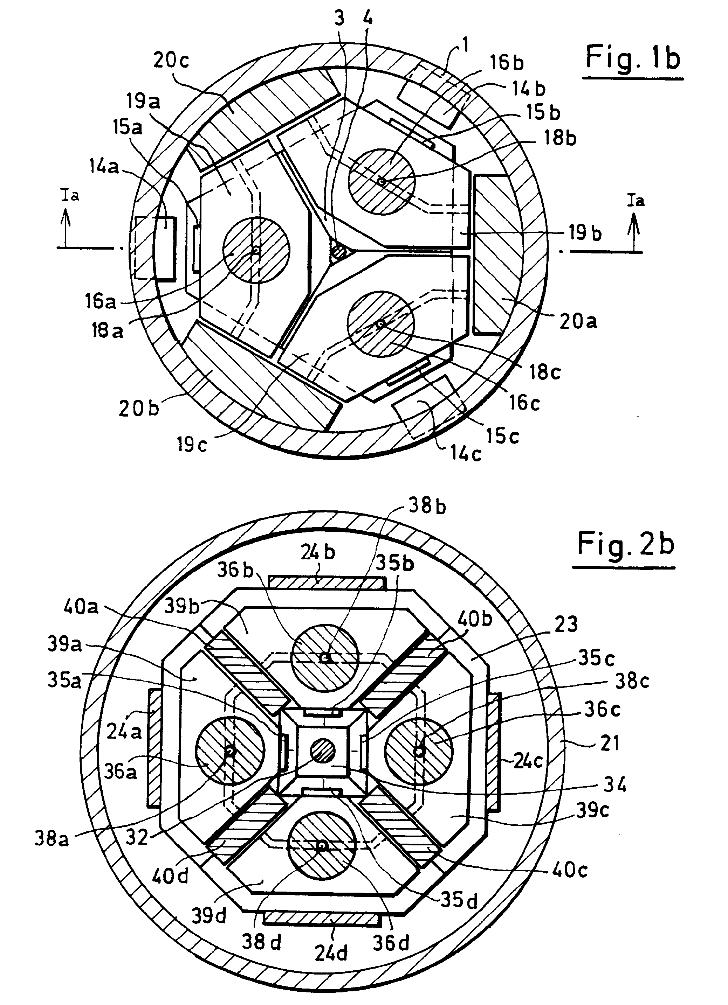

Weitere Vorteile der Erfindung ergeben sich aus der nachfolgenden Beschreibung von Ausführungsbeispielen anhand der Figuren 1 - 7 der beigefügten Zeichnungen.
- Fig. 1a: zeigt ein erstes Ausführungsbeispiel des erfindungsgemäßen Tastkopfs im Schnitt in einer die Tasterlängsachse enthaltenden Ebene;
- Fig. 1: ist ein Schnitt des Tastkopfs aus Fig. 1a entlang der Linie Ib-Ib in Fig. 1a;
- Fig. 2a: zeigt ein zweites Ausführungsbeispiel des erfindungsgemäßen Tastkopfs im Schnitt in einer die Tasterlängsachse enthaltenden Ebene;
- Fig. 2b: zeigt den Tastkopf aus Fig. 2a im Schnitt entlang der Linie IIb-IIb in Fig. 2a;
- Fig. 3a: ist die Schnittzeichnung eines im Vergleich zu Fig. 1a leicht geänderten, dritten Ausführungsbeipiels der Erfindung in der Ebene der Tasterlängsachse;
- Fig. 3b: ist eine perspektivische Darstellung eines der drei Zwischenkörper (119) aus Fig. 3a;
- Fig. 4: ist ein Detailschnitt eines Zwischenkörpers für ein gegenüber dem Ausführungsbeispiel nach Fig. 3a leicht abgewandelten Tastkopfs gemäß der Erfindung;
- Fig. 5: ist ein Blockschaltbild der elektro-pneumatischen Regelschaltung für den Tastkopf nach Fig. 3a;
- Fig. 6: ist eine perspektivische Prinzipskizze, die die wesentlichen Teile eines weiteren, alternativen Ausführungsbeispiels der Erfindung zeigt;
- Fig. 7: zeigt teils im Schnitt, teils in Ansicht ein fünftes Ausführungsbeispiel der Erfindung.

Der in Fig. 1a bzw. 1b dargestellte Tastkopf besitzt ein zylindrisches, nach einer Seite offenes Gehäuse (1), in das mittig ein ebenfalls feststehender Ring (2) eingesetzt ist. Von diesem Ring (2) ragen drei im Winkel von 120° versetzt am Außenumfang angebrachte Führungsteile (20a, 20b, 20c) in Richtung auf die Öffnung im Gehäuse (1) weg. Die nach innen gewandten Seiten jeweils zweier Führungsteile (20) bilden die Linearführung für einen daran in Richtung der Tasterlängsachse über Luftlager gleitenden Führungsstein (19a, 19b, 19c). Diese Führungssteine (19) besitzen die Form eines sechseckigen Prismas, wobei jedoch die der Öffnung an der Unterseite des Gehäuses (1) zugewandten Grundflächen der drei Führungssteine (19a-c) unter einem Winkel gegen die Tasterlängsachse abgeschrägt sind und einen tetraederförmigen Raum begrenzen. An diesen Flächen liegt der eigentliche Taststiftträger (3) an, dessen Oberseite dementsprechend ebenfalls die Form eines Tetraeders oder die einer Würfelkante besitzt. Der Taststiftträger (3) ist der eigentliche bewegliche Teil des Tastkopfes und trägt an seiner Unterseite eine Taststiftaufnahme (13), an der ein Taststift (11) mit seinem Wechselteller (12) anliegt. Form und Funktionsweise der Aufnahme (13) bzw. des Wechseltellers (12) werden nicht näher beschrieben, sondern in diesem Zusammenhang wird vielmehr ausdrücklich auf die US-PS 46 37 119 verwiesen.

Die linear verschieblichen Führungssteine (19a-c) sind durch in den Ring (2) eingesetzte Druckmittelzylinder beaufschlagt, deren Kolben (16a-c) an der Oberseite der Führungssteine (19a-c) befestigt sind. Mit (17a-c) sind die Bälge bezeichnet, die den jeweiligen Kolben (16a-c) gegen die Zylinderinnenwand abdichten.

Aus diesen Druckmittelzylindern werden über durch die Kolben (16a-c) hindurch verlaufende Kanäle (18a-c) außerdem die Luftlager versorgt, über die sich der Taststiftträger (3) an den geneigten Flächen der Führungssteine (19a-c) abstützt, sowie die Luftlager, auf denen sich die Führungssteine (19a-c) an den Flächen der Führungsteile (20a-c) gleitend abstützen.

Zur Verspannung der Luftlager zwischen dem Taststiftträger (3) und den Führungssteinen (19a-c) ist der Taststiftträger (3) über eine in seine Oberseite eingeschraubte Zugstange (4) mit einer Scheibe (5) verbunden, in deren Unterseite ebenfalls drei um 120° versetzt angeordnete Druckkolben (6a-c) über Bälge (7a-c) abgedichtet in entsprechenden Druckzylindern geführt sind. Hierbei greift die Zugstange (4) durch die zentrale Öffnung (10) im gehäusefesten Ring (2) hindurch. Die Kolben (6a-c) stützen sich auf einer ringförmigen Platte (9) ab, die mittels dreier Luftlager auf der Oberseite des Ringes (2) senkrecht zur Tasterlängsachse schwimmend gelagert ist. Diese Luftlager werden in gleicher Weise durch Kanäle (8a-c) im Innern der Kolben (6a-c) aus den Druckzylindern im Ring (5) versorgt. Die Zuleitungen zu den Druckmittelzylindern sind der besseren Übersichtlichkeit halber im dargestellten Ausführungsbeispiel weggelassen.

An den dem Gehäuse (1) zugewandten Seiten sind auf die Führungssteine (19a-c) Glasmaßstäbe (15a-c) aufgeklebt, die von entsprechenden Abtastköpfen (14a-c) an der Innenseite des Gehäuses (1) abgetastet werden. Über diese drei Längenmeßsysteme (14a/15a, 14b/15b bzw. 14c/15c) läßt sich die Lage der drei Tetraederflächen an der Unterseite der Führungssteine (19a-c) in Richtung der Tasterlangsachse genau bestimmen.

Die Funktionsweise des vorstehend beschriebenen Tastkopfes ist wie folgt:

Stellt man den Druck, der von den Druckmittelzylindern auf die drei Kolben (16a-c) ausgeübt wird, auf den gleichen Wert ein und erhöht den Druck auf die Druckmittelzylinder (6a-c) darüberhinaus um einen Betrag der das Gewicht des Taststiftträgers (3) mit den daran befestigten Teilen kompensiert, dann läßt sich der Taststiftträger (3) sehr leicht in einer Mittelstellung halten, die etwa der in der Zeichnung dargestellten Lage entspricht. Im Zuge eines Antastvorganges wird der Taststiftträger (3) durch den Kontakt zwischen Werkstück und Taststift (11) verlagert. Hierbei gleitet er teils an den geneigten Flächen der Führungssteine (19a-c) entlang, teils verschiebt er diese entlang ihrer Linearführungen in Richtung der Tasterlängsachse. Dies ist durch die entsprechenden Pfeile an den Führungssteinen (19a und 19b) angedeutet. Die Meßsysteme (14a-c/15a-c) messen diese Verlagerung der Führungssteine (19a-c). Aus den drei Meßwerten läßt sich die Lage des Taststiftträgers (3) immer eindeutig entsprechend dem durch die Neigung der Gleitflächen gegebenen linearen Zusammenhang berechnen. Voraussetzung hierfür ist, daß die Flächen des Taststiftträgers (3) und die der Führungssteine (19a-c) miteinander in Kontakt bleiben bzw. der Spalt der betreffenden Luftlager konstant bleibt, was infolge der Verspannung über die mit der Zugstange (4) verbundenen Teile (5-9) gewährleistet ist.

An dieser Stelle soll noch erwähnt werden, daß auf die Verspannung verzichtet werden kann und dann die Teile (5-9) entfallen, wenn für die Luftlager zwischen den Flächen des Taststiftträgers (3) und der Führungssteine (19a-c) sogenannte selbstansaugende Luftlager verwendet werden, die neben einem Luftzuführungskanal zusätzlich einen Saugkanal zur Erzeugung von Unterdruck in an das Lager angrenzenden Flächenbereichen besitzen. Solche Luftlager sind u.a. in der US-PS 4 558 909 beschrieben.

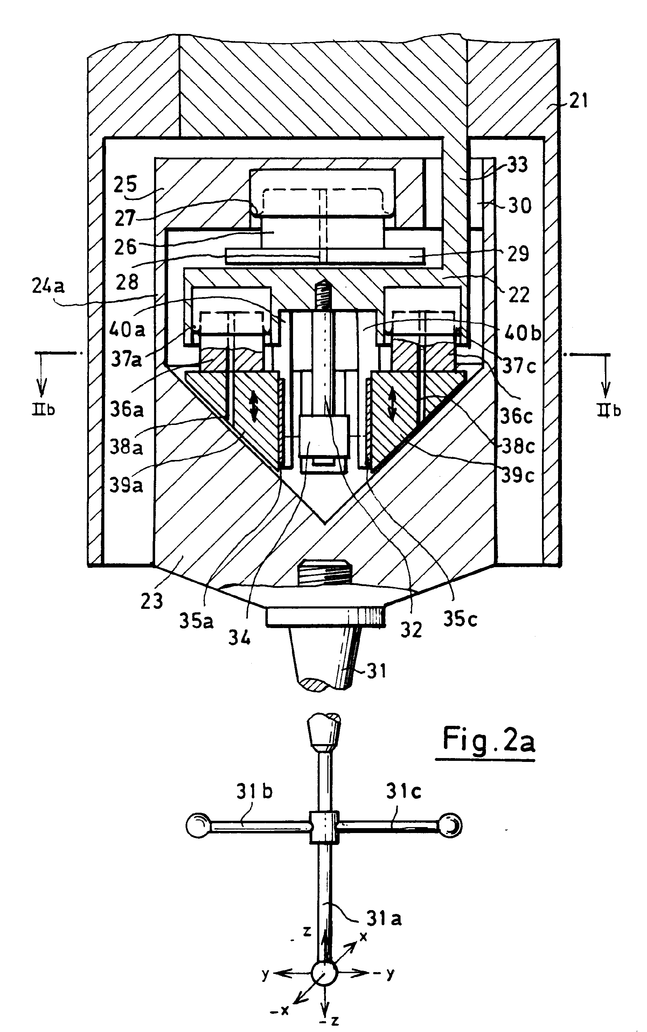

In Fig. 2a ist ein alternatives Ausführungsbeispiel des Tastkopfs dargestellt, das in mehrfacher Hinsicht abgewandelt ist: in dem mit (21) bezeichneten feststehenden Gehäuse ist eine Halterung eingesetzt, die über drei um 120° versetzt in Richtung des Taststifts (31) vorstehende Träger (33) eine Platte (22) mit ebener Oberfläche hält. Auf dieser Oberfläche schwimmt auf einem Luftlager (29) der über einen Balg (27) abgedichtete Kolben (26) eines Druckzylinders. Der Druckzylinder ist durch die zentrische Bohrung einer Platte (25) gebildet, an der über vier ebenfalls nach unten in Richtung auf den Taststift (31) wegragende, fingerartige Träger der bewegliche Teil des Tastkopfes, d.h. der Taststiftträger (23) aufgehängt ist. In der beschriebenen Anordnung greifen die drei Träger (33) des feststehenden Teils durch drei entsprechend groß dimensionierte Öffnungen (30) in der Platte (25) hindurch und erlauben damit ein seitliches Verschieben der beweglichen Taststiftteile.

Der Taststiftträger (23) ist auf seiner dem Gehäuse zugewandten Seite mit vier schräg zur Taststiftachse geneigten Fläche versehen, die eine Vertiefung in Form einer negierten vierseitigen Pyramide bilden. Auf diese vier Flächen sind die Gegenflächen von vier Führungssteinen (38a-d) gesetzt. Auch hier sind Luftlager zwischen den vier Flächen am Taststiftträger (23) und den Gegenflächen der Führungssteine angeordnet, was durch die Kanäle (38a-d) angedeutet ist. Die Führungssteine (39a-d) sind in Richtung der Taststiftachse linear beweglich an den Flächen von vier fingerartigen Führungsteilen (40a-d) geführt. Den Führungssteinen (39a-d) sind ebenfalls wieder Druckzylinder zugeordnet, wobei die entsprechenden Kolben mit (36a-d) und die Membranen mit (37a-d) bezeichnet sind. Die Druckzylinder sind durch Bohrungen in der Unterseite der Trägerplatte (22) gebildet.

An der Unterseite der Platte (22) ist zentrisch außerdem ein Träger (32) eingeschraubt, der am taststiftseitigen Ende die in einem Gehäuse (34) untergebrachten vier Ableseköpfe für die an den Führungssteinen (39a-d) aufgeklebten Maßstäbe (35a-d) enthält.

Ein Vorteil dieser gegenüber Fig. 1a negierten Anordnung der geneigten Führungsflächen ist in der höheren Steifigkeit gegen Torsionsbewegungen des Taststifts zu sehen, d.h. für den Fall daß mit den seitlich wegragenden Taststiften (31b bzw. 31c) das Werkstück aus der Papierebene heraus angetastet wird. Diese höhere Torsionssteifigkeit ergibt sich daraus, daß die Torsionskräfte der zwischen den vier Führungsteilen (40a-d) über Luftlager geführten Führungssteine (39a-d) senkrecht auf die Flächen der Führungsteile (40a-d) gerichtet sind. Ein weiterer Vorteil ist in der vierzähligen Symmetrie der Führungssteine begründet. Deren Bewegungen lassen sich dann einfacher dem karthesischen Koordinatensystem des Meßgerätes zuordnen, an dem der Tastkopf befestigt ist. Es ist weiterhin möglich, einzelne Auslenkungsrichtungen mechanisch zu klemmen, in dem durch ein geeignetes Gesperre beispielsweise die gegenüberliegenden Paare von Führungssteinen (36a/36c oder 36b/36d) gegen Relativbewegung gesichert werden. Dies entspräche einer Klemmung der beiden waagerechten Koordinaten x und y.

Die Funktionsweise dieses in Fig. 2a und 2b dargestellten Tastkopfes entspricht im wesentlichen den aus Fig. 1a und Fig. 1b. Die Luftlager zwischen den geneigten Unterseiten der Führungssteine (39a-d) und den Gegenflächen des Taststiftträgers (23) sind durch die Druckkolben (36a-d) in Verbindung mit dem einzelnen bezüglich seiner Kraftrichtung entgegengesetzten Druckkolben (26) miteinander verspannt, erlauben jedoch ein reibungsfreies Gleiten der Flächen aufeinander. Der Druck wird so geregelt, daß sich der Taststiftträger (23) entweder in einer Mittelposition befindet oder in Richtung auf das zu vermessende Werkstück vorausgelenkt ist. Infolge des Werkstückkontakts verschiebt sich der Taststift bzw. der Taststiftträger (23), bei Seitwärtsbewegungen des Taststiftsträgers (23) gleiten die Führungssteine (39a-d) auf den Flächen im Taststiftträger (23) und führen eine auf- bzw. abwärtsgerichtete Bewegung aus, die mit den Meßsystemen (34a-d/35a-d) erfaßt wird.

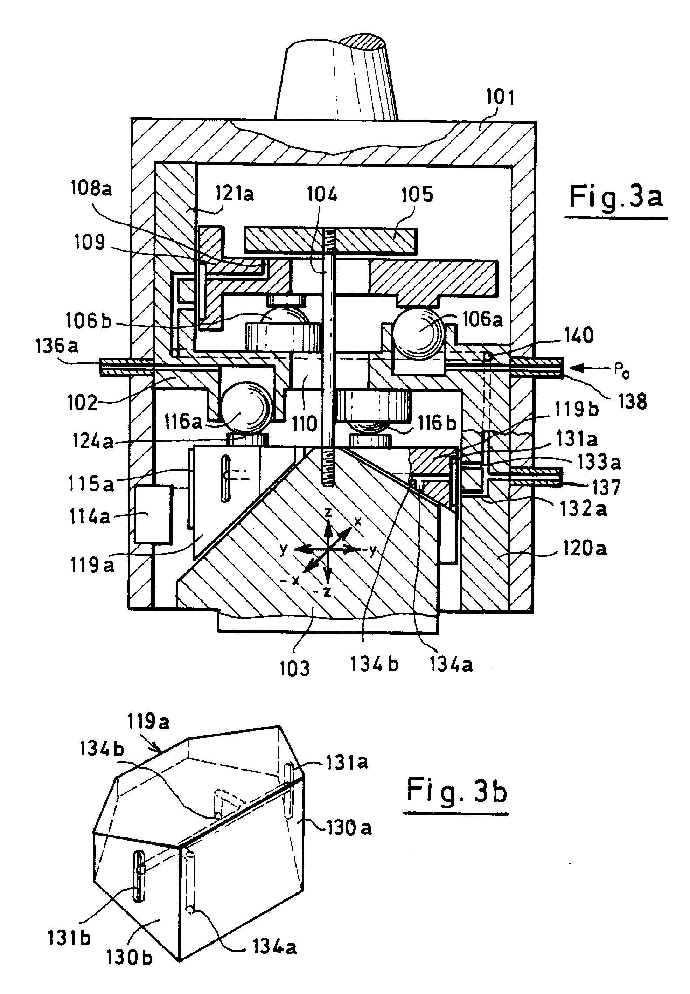

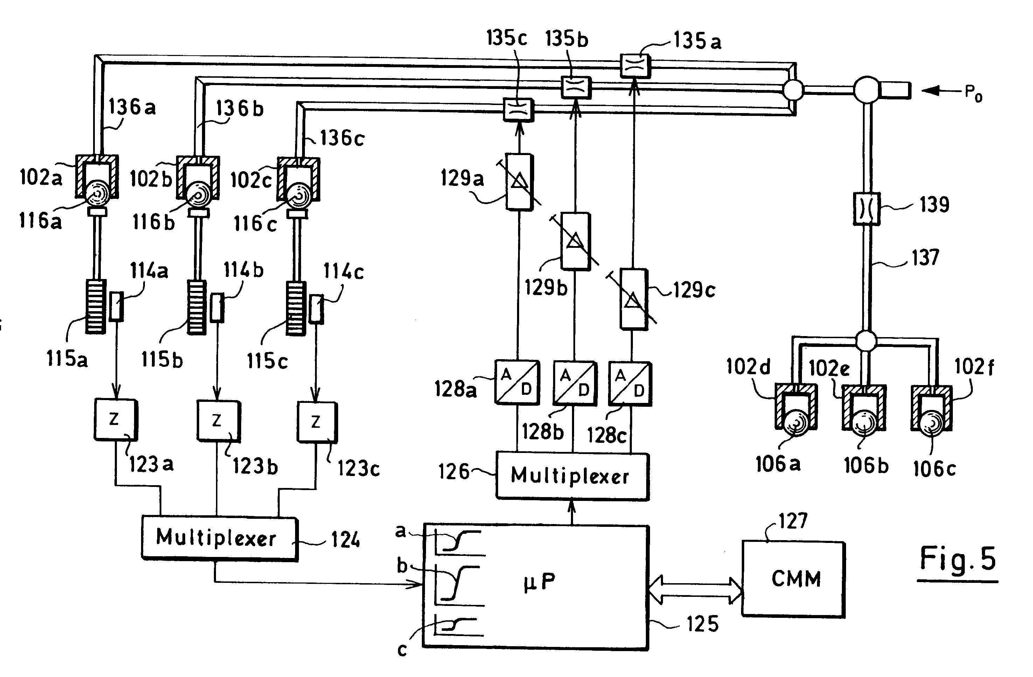

Im Ausführungsbeispiel nach Fig. 3a und 3b ist ein im Vergleich zu Fig. 1a nur wenig modifizierter Tastkopf dargestellt. In den Figuren sind deshalb jeweils um 100 höhere, ansonsten jedoch gleiche Bezugszeichen für gleiche bzw. von ihrer Funktion her gleiche Teile verwendet. Es genügt daher, allein auf die Unterschiede bzw. Vorteile gegenüber dem Tastkopf nach Fig. 1a einzugehen.

Als Druckkolben sind für den Tastkopf in Fig. 3a Kugeln (116a,b,c) verwendet, die jeweils punktförmig auf eine polierte Stirnfläche (124a-c) an der Oberseite der Führungssteine (119a-c) drücken. Dies hat mehrere Vorteile. Zum einen bewegen sich die Kugeln infolge der seitlich aus dem Druckzylinder an ihnen vorbeiströmenden Luft völlig reibungsfrei und ein Verkanten ist ausgeschlossen, so daß auch keine Querkräfte auf die linear geführten Führungssteine (119a-c) ausgeübt werden. Da außerdem bei dieser Art Druckkolben permanent Luft aus dem Druckmittelzylinder entweicht, ist es möglich, den Druck innerhalb des Zylinders über die zugeführte Luftmenge sehr feinfühlig zu regeln.

Weitere Modifizierungen finden sich in dem Bereich des Tastkopfes, der zur Vorspannung des Taststiftträgers (103) auf die Flächen der Führungssteine (119a-c) dient. Hierfür sind drei ebenfalls kugelförmige Druckkolben (106a-c) vorgesehen, die in entsprechenden Zylindern an der Oberseite des Ringes (102) eingebracht sind. Auf diesen Kugeln (106a-c) liegt längsverschieblich ein Ring (109) auf. Auf dem Ring (109) wiederum schwimmt eine Platte (105), die über die Zugstange (104) mit dem Taststiftträgers (103) verbunden ist. Diese Anordnung hat den Vorteil, daß alle Druckmittelzylinder am feststehenden Teil des Tastkopfes montiert sind, so daß keine flexiblen Zuführungsleitungen zum beweglichen Teil des Tastkopfes benötigt werden, die andernfalls unerwünschte Rückstellkräfte auf die beweglichen Teile ausüben würden.

Derartige flexible Zuführungsleitungen werden auch für die Luftlager in diesem Tastkopf nicht benötigt. Denn die Luftlager zur Führung der Führungssteine (119a-c) entlang der Tasterlängsachse verlaufen ebenso wie die Zuleitungen zu den Luftlagern für die Führung des Ringes (109) allein in gehäusefesten Teilen (120a-c bzw. 121a-c). Die Luftlager, auf denen der Taststiftträger (103) an den Führungssteinen (119a-c) gleitet, werden indirekt mit dem Lagerdruck der Führungen der Führungssteine (119a-c) am Gehäuse versorgt. Dies geht aus der perspektivischen Darstellung nach Fig. 3b hervor. Danach ist in die beiden Führungsflächen (130a und 130b) des Führungssteins (119a) im Bereich der Luftdüsen (132a und 133a) im Lagerteil (120a) (Fig. 3a) je ein Schlitz (131a bzw. 131b) eingebracht, der sich in Führungsrichtung erstreckt. Von diesen Schlitzen führen Kanäle zu den beiden Luftdüsen (134a und 134b) an den abgeschrägten Flächen des Führungssteins (119a).

Eine ganz entsprechende Lösung ist für die Versorgung der Luftlager an der Oberseite des verschieblichen Ringes (109) gewählt, auf dem die zur Verspannung des Taststiftträgers (103) dienende Scheibe (105) schwimmt.

Zur Versorgung aller Luftlager im Tastkopf ist an der Außenseite des Gehäuses (101) ein Anschlußstück (137) vorgesehen. Eine ringförmig verlaufende Leitung (140) im Teil (102) verbindet die Zuführungskanäle für die Lager des Ringes (109) mit denen für die Führungssteine (119a-c). Die drei Druckzylinder für die kugelförmigen Kolben (106a-c) im oberen Teil des Tastkopfes werden gemeinsam aus einem Anschlußstück (138) versorgt. Hingegen sind die Druckzylinder für die Kugeln (116a-c), mit denen die Führungssteine (119a-c) beaufschlagt werden, einzeln an besondere Zuführungsleitungen (136a-c) angeschlossen.

Dies ist im übrigen aus dem Blockschaltbild für den pneumatisch/elektrischen Regelkreis dieses Tastkopfes in Fig. 5 ersichtlich. Dort sind die Zuführungsleitungen für die Druckluftzylinder (102a,b und c), in denen die kugelförmigen Kolben (116a,b, und c) gleiten, mit (136a,b, und c) bezeichnet. Zur Steuerung des Drucks in den Kolben (102a-c) und damit der Kraft, die die Kolben (116a-c) auf die Führungssteine (119a-c) ausüben, ist in jede der Leitungen (136a-c) ein separates elektrisch ansteuerbares Regelventil (135a-c) geschaltet. Diese Regelventile (135a-c) liegen zusammen mit den Meßsystemen (114a/115a bzw. 114b/115b und 114c/115c), mit denen die Position der Führungssteine (119a-c) gemessen wird, in einem Lageregelkreis, d.h. jeder Führungssteine (119a-c) ist in einen separaten Regelkreis eingebunden. Kernstück der drei Regelkreise ist ein Mikroprozessor (125), der die für die Regelung erforderlichen Stellgrößen über eine Datenleitung vom Rechner (127) des Koordinatenmeßgerätes erhält. Stellgrößen sind beispielsweise die Nullpunkte der Meßsysteme, auf die einzustellen ist. Über diese Nullpunkte läßt sich u.a. auch eine beliebige Vorauslenkung des Taststiftträgers (103) in Richtung auf das zu vermessende Werkstück einstellen.

Die drei kugelförmigen Druckkolben (106a-c), mit denen die Lagerflächen zwischen dem Taststiftträgers (103) und den Führungssteinen (119a-c) verspannt werden, sind in Druckzylindern (102d,e und f) geführt. Diese Druckzylinder sind gemeinsam über ein Stellventil (139) an den Versorgungsdruck P0 angeschlossen, der auch die drei Regelventile (135a-c) versorgt. Im Ruhezustand, wenn der Taststift an seinem Träger (103) kräftefrei im Nullpunkt gehalten ist, ist der Druck in den Druckmittelzylindern (102a-c) bis auf einen Betrag, der zur Kompensation des Gewichts von Taststiftträger und Taststift dient, mit dem Druck in den Zylindern (102d-f) identisch. Eine Anpassung an das Gewicht unterschiedlicher eingewechselter Taststifte läßt sich über die Regelung des Offsets, d.h. der Grundeinstellung des Luftdurchflußes durch die drei Regelventile (135a-c) herbeiführen.

Der Mikroprozessor (125) ist über einen Multiplexer (124) in alle drei Regelkreise eingebunden und fragt über den Multiplexer (124) im Zeitmultiplexbetrieb die Zählerstände von drei Zählern (123a,b und c) ab. Dieser Zählerstand repräsentiert jeweils die Ist-Position eines Führungssteins (119a-c), wie sie mit den Meßsystemen (114a-c/115a-c) ermittelt wird.

Der Mikroprozessor (125) führt weiterhin den Soll/Ist Vergleich zwischen den gemessenen Positionswerten und den vom Rechner (127) gelieferten Führungsgrößen durch, berechnet daraus die Stellgrößen für die drei Regelventile (135a-c) und gibt die entsprechenden Signale über einen zweiten Multiplexer (126) und drei den drei Regelkreisen zugeordneten Digital/Analogwandler (128a-c) an die Verstärker (129a-c) zur Ansteuerung der Regelventile (135a-c).

Im Mikroprozessor (125) sind weiterhin für die drei Regelkreise separat die Parameter abgelegt, von denen die Regelcharakteristik jedes der drei Regelkreise bestimmt wird. Dies ist durch die drei untereinander gezeichneten Graphen mit verschiedener Steigung im Mikroprozessor (125) in Fig. 5 symbolisiert. Über die Steilheit der Regelkennlinie läßt sich die Nachgiebigkeit bzw. Härte der Gegenkraft einstellen, die von den Druckkolben (116a-c) auf die Führungssteine (119a-c) und damit auf den Taststiftträger (103) als Reaktion auf Auslenkbewegungen beim Werkstückkontakt ausgeübt wird. Auf diese Weise ist es beispielsweise möglich, geinzelne Auslenkrichtungen elektronisch zu "klemmen", indem dieser Auslenkrichtung ein besonders "hartes" Rückstellverhalten aufgeschaltet wird. Weiterhin läßt sich über die Regelkennlinie die Antastkraft, d.h. die zwischen Taststift und Werkstück beim Messen wirkende Kontaktkraft einstellen. Die entsprechenden Parameter empfängt der Mikroprozessor (125) ebenfalls vom Rechner (127) des Koordinatenmeßgerätes.

Es soll an dieser Stelle darauf hingewiesen werden, daß die beschriebene aktive Regelung der auf den Taststiftträger (103) in den verschiedenen Richtungen ausgeübten Rückstellkraft es außerdem erlaubt, den Tastkopf (101) in verschiedenen Raumrichtungen auszurichten und den Nullpunkt des Tastsystems dennoch beizubehalten. Das System ist außerdem genügend schnell, um auch auf die wechselnden Momente während einer Schwenkbewegung im Raum zu reagieren.

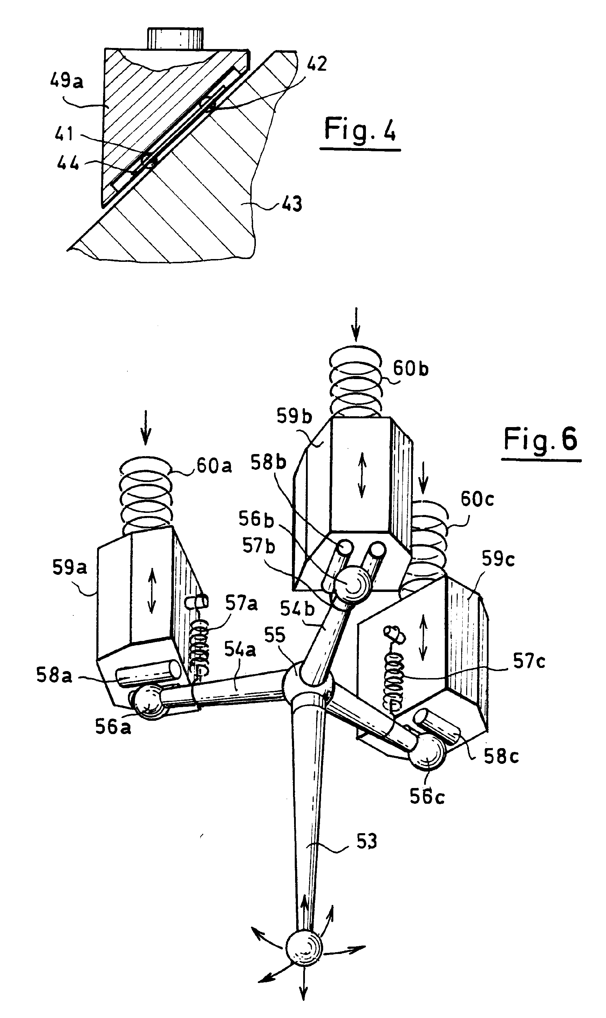

In den bisherigen Ausführungsbeispielen wurden stets Luftlager zwischen den Führungssteinen und den entsprechenden Flächen am Taststiftträgers verwendet. Natürlich ist es auch möglich, an dieser Stelle Wälzlager zu verwenden, wie dies in der vergrößerten Darstellung nach Fig. 4 ersichtlich ist. Dabei kann es durchaus ausreichend sein, zwei Kugeln (41 und 42) beispielsweise in einem Kugelkäfig (44) zu halten und zwischen den geneigten Flächen an der Unterseite eines Führungssteins (49) und der entsprechenden Gegenfläche am Taststiftträger (43) anzuordnen. Denn da mindestens drei der Führungssteine in dem Tastkopf benötigt werden, stützt sich der Taststiftträger (43) dann auf mindestens sechs Punkten ab. Hierdurch ist seine Lage immer eindeutig bestimmt, vorausgesetzt daß die Flächen, auf denen die Kugeln rollen, ausreichend eben sind.

Weiterhin ist es auch nicht unbedingt erforderlich, die Lagerung auf den Führungssteinen so zu gestalten, daß der Taststiftträger nur lineare Bewegungen ausführen kann. Ein entsprechendes Ausführungsbeispiel, das Schwenkbewegungen des Taststifts in lineare Bewegungen dreier Zwischenkörper bzw. Führungssteine umsetzt, ist in Fig. 6 dargestellt. In der vereinfachten Darstellung ist der feststehende Teil bzw. das Gehäuse des Tastkopfes weggelassen. Zu sehen sind jedoch die im Gehäuse linear und parallel verschieblichen Zwischenkörper (59a,b und c), die von Federn (60a-c) in eine Grundstellung gedrückt werden. Die Bewegung der Zwischenkörper (59a-c) kann wie in Fig. 1 - 3 beschrieben durch Meßsysteme an den Zwischenkörpern (59a-c) erfaßt werden.

An der Stirnseite jedes Zwischenkörpers (59a-c) ist je ein Zylinderpaar (58a,58b und 59c) in radialer Ausrichtung eingelassen. Diese drei Zylinderpaare dienen dem Taststiftträger (55) als Lager, der mit drei im Winkel von 120° radial nach außen wegragenden Armen (54a-c) und an den Enden dieser Arme angebrachten Kugeln (56a-c) auf den Zylinderpaaren aufliegt. Diese Art der Lagerung ist an sich für sogenannte schaltende Tastköpfe bekannt. Während dort jedoch im Zuge von Antastvorgängen der Taststiftträger jeweils an mindestens einem der drei Lager abhebt, ist in dem Ausführungsbeispiel nach Fig. 6 dafür gesorgt, daß die Kugeln (56a-c) auch bei Schwenkbewegungen des Taststifts (53) immer im Kontakt mit den Zylinderpaaren (58a-c) bleiben. Hierzu sind drei Zugfedern (57a-c) vorgesehen, mit denen die Arme (54a-c) jeweils gegen den zugehörigen Zwischenkörper (59a-c) gezogen werden, dem sie zugeordnet sind.

Die beschriebene Anordnung gewährleistet einen eindeutigen Zusammenhang zwischen der Position der Tastkugel am Ende des Taststifts (53) und den Linearverschiebungen der Zwischenkörper (59a-c), wobei die Schwenkbewegung des Taststifts (53) in diesem Falle aufgrund der Lagergeometrie zwischen Taststiftträger und Zwischenkörper in Linearbewegungen der drei Zwischenkörper (59a-c) umgesetzt wird. Über eine entsprechende Rückrechnung läßt sich daher aus dem Grad der Verschiebung der Zwischenkörper (59a-c) relativ zum Gehäuse die Position der Tastkugel und damit das Ausmaß der Schwenkbewegung sicher erfassen. Mit einem solchen Tastkopf ist daher im Gegensatz zu bekannten schaltenden Tastköpfen durchaus auch ein kontinuierliches Abscannen der Werkstückoberfläche möglich.

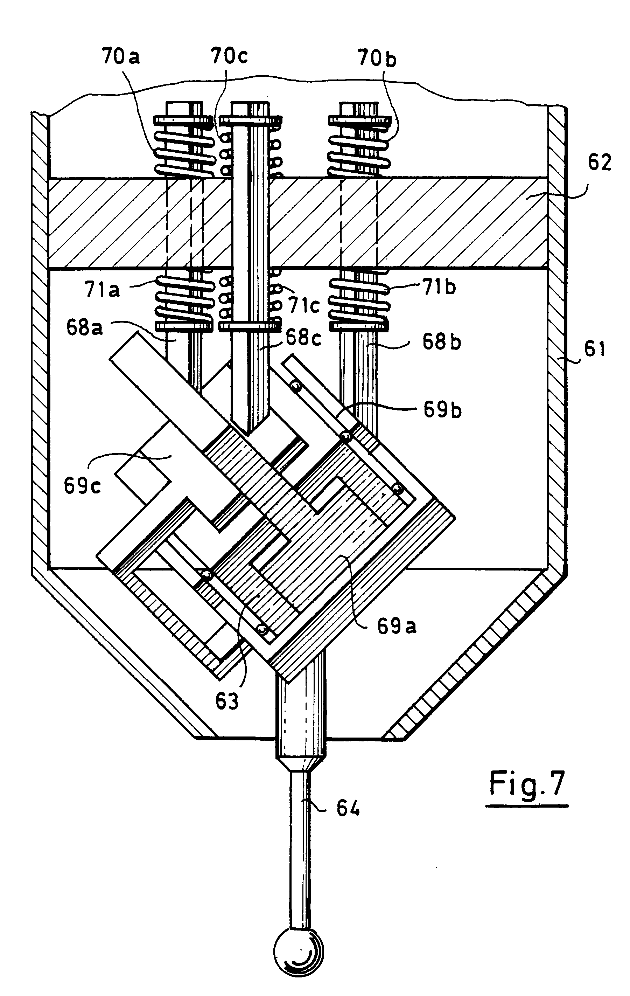

Im Außführungsbeispiel nach Fig. 7 ist ein passiver messender Tastkopf dargestellt. Hier ist das feststehende Gehäuse mit (61) bezeichnet und ein in das zylindrische Gehäuse eingesetzter, ebenfalls feststehender zylindrischer Ring (62) enthält die Führungen für drei linear entlang der Taststiftachse verschiebbare Zwischenkörper (68a-c). Diese Zwischenkörper (69a-c) sind durch zwei beidseitig des Ringes (62) angeordnete Federpaare (70a/71a, 70b/71b und 70c/71c) nachgiebig in einer Mittellage gehalten.

An der dem Taststift (64) zugewandten Seite tragen die Zwischenkörper (68a-c) jeweils U-förmige Bügel (69a-c). Die Schenkel der U-förmigen Bügel sind jeweils 120° radial um die Taststiftachse herum angeordnet und schräg zur Taststiftachse so ausgerichtet, daß sie mit den als Hilfsführungen ausgebildeten Flächenpaaren den dazwischen eingesetzten würfelförmigen Taststiftträger (63) an jeweils gegenüberliegenden Würfelflächen umfassen.

Zwischen den Flächen des Würfels und den Flächen der U-förmigen Bügel (69b) ist im gezeichneten Ausführungsbeispiel ein zweidimensionales Wälzlager gesetzt, das durch Kugeln gebildet wird. An dieser Stelle kann jedoch auch ein Luftlager Verwendung finden.

Mit den U-förmigen Bügeln, die den Würfel umfassen, läßt sich die Vorspannung der Flächenlager unabhängig von der Kraft einstellen, die dem Taststift bei einer Ausweichbewegung während des Antastvorganges entgegengesetzt wird. Denn letztere ist allein durch die Federpaare (70/71) bestimmt.

Während Antastvorgängen bewegt sich der würfelförmige Taststiftträger (63) zwischen den Bügeln (69a-c), verschiebt diese und damit auch die Zwischenkörper (68a-c) in Richtung der Taststiftlängsachse und deren Bewegung kann wieder wie in den übrigen Ausführungsbeispielen beschrieben mit Meßsystemen erfaßt und zur Berechnung der Ist-Lage der Tastkugel am Taststift (64) verwendet werden.

In den beschriebenen Ausführungsbeispielen sind die drei bzw. vier Führungssteine in jedem Tastkopf stets parallel verschieblich geführt. Dies erlaubt zwar einen schlanken Aufbau des Tastkopfes, ist jedoch nicht unbedingt erforderlich. Es ist ebenfalls möglich, die Führungssteine beispielsweise radial in Richtung auf die Tasterlängsachse beweglich oder senkrecht auf die geneigten Flächen des Taststiftträgers gerichtet zu führen. Es ergibt sich dann bezogen auf die Tasterachse ein eher kurzer, flacher Aufbau des Tastkopfes.

## Patentansprüche

1. Tastkopf vom messenden Typ für z.B. Koordinatenmeßgeräte, mit einem den Taststift tragenden Teil, das über mehrere Führungen in allen Raumrichtungen beweglich gelagert ist und dem Meßsysteme zur Erfassung der Auslenkbewegung zugeordnet sind, dadurch gekennzeichnet, daß das bewegliche Teil (3;23;53;63;103) mittelbar auf mindestens drei unabhängig voneinander linear geführten Zwischenkörpern (19a-c;39a-d;59a-c;68a-c;69a-c;169a-c) beweglich so gelagert ist, daß sich die Position des beweglichen Teils bei allen Verstellbewegungen eindentig einer bestimmten Position der Zwischenkörper zuordnen läßt.

2. Tastkopf nach Anspruch 1, dadurch gekennzeichnet, daß die Führungsrichtungen der mindestens drei Zwischenkörper zueinander parallel sind.

3. Tastkopf nach Anspruch 1, dadurch gekennzeichnet, daß am beweglichen Teil (3;23;103) mindestens drei winklig zueinander ausgerichtete, ebene Flächen vorgesehen sind, mit denen das bewegliche Teil an jeweils einer entsprechenden Gegenfläche an jedem Zwischenkörper geführt ist.

4. Tastkopf nach Anspruch 3, dadurch gekennzeichnet, daß zwischen den ebenen Flächen Gaslager bzw. Luftlager (18a-c;38a-d;134a,b) angeordnet sind.

5. Tastkopf nach Anspruch 4, dadurch gekennzeichnet, daß die Zwischenkörper ebenfalls über Luftlager gegenüber dem feststehenden Teil (120a-c) des Tastkopfes linear geführt sind und die Gaszuführung für die Gaslager (134a,b) zwischen den ebenen Flächen am beweglichen Teil (103) und denen am Zwischenkörper (119a) über in den Zwischenkörper eingebrachte Kanäle (131a,b) aus den Gaslagern heraus erfolgt, die zwischen dem feststehenden Teil (120a) und den Zwischenkörpern (119a) angeordnet sind.

6. Tastkopf nach Anspruch 1, dadurch gekennzeichnet, daß mindestens ein weiteres Lager (8a,28,108a) für das bewegliche Teil (3;23;103) des Tastkopfes vorgesehen ist, welches zur Vorspannung der mindestens drei Lager (18a-c;38a-d;118a-c) zwischen dem beweglichen Teil und den Zwischenkörpern (19a-c;39a-d;119a-c) dient.

7. Tastkopf nach Anspruch 3 und 6, dadurch gekennzeichnet, daß die Vorspannung der ersten mindestens drei Lager durch eine gleiche Anzahl weiterer Lager erfolgt, wobei die weiteren Lager durch entsprechende Flächen am beweglichen Teil (63) des Tastkopfes (61) gebildet sind, die zu den Flächen der ersten Lager parallel sind.

8. Tastkopf nach Anspruch 1, dadurch gekennzeichnet, daß das bewegliche Teil (43) über jeweils zwei Berührpunkte (41/42) an den drei unabhängig linear geführten Zwischenkörpern (49a) anliegt.

9. Tastkopf nach Anspruch 1, dadurch gekennzeichnet, daß die Meßsysteme (14a-c;15a-c;34a-d/35a-d;114a-c/115a-c) die Bewegung der Zwischenkörper relativ zum feststehenden Gehäuse (1,21,101) des Tastkopfes erfassen.

10. Tastkopf nach Anspruch 1, dadurch gekennzeichnet, daß im Tastkopf Kraftgeneratoren (16a-c;36a-d;116a-c) für den aktiven Antrieb der Zwischenkörper vorgesehen sind.

11. Tastkopf nach Anspruch 10, dadurch gekennzeichnet, daß die Kraftgeneratoren Druckluftkolben (16a-c;36a-d;116a-c) oder Tauchspulen sind.

12. Tastkopf nach Anspruch 9-11, dadurch gekennzeichnet, daß die Meßsysteme (114a-c/115a-c) und die Kraftgeneratoren (116a-c/120a-c) jedes Zwischenkörpers jeweils in einen Regelkreis geschaltet sind und die Kennlinie jedes Regelkreises separat einstellbar ist.

## Claims

1. A probe head of the measuring type for, for example, coordinate measuring instruments, the probe head having a part bearing the probe-pin which is moveably supported via a plurality of guides in all directions in space and with which measurement systems for the detection of the deflection movement are associated, characterized by the fact that the moveable part (3; 23, 53, 63, 103) is moveably mounted indirectly on at least three intermediate bodies (19a-c; 39a-d; 68a-c; 69a-c;
169a-c) which are linearly guided independently of each other in such a manner, that the position of the moveable part corresponds unambiguously to a certain position of the intermediate bodies during all kinds of displacement.

2. A probe head according to Claim 1, characterized by the fact that the guidance directions of at least three intermediate bodies are parallel to each other.

3. A probe head according to Claim 1, characterized by the fact that at least three flat surfaces directed at an angle to each other are provided on the moveable part (3; 23; 103) by which surfaces to moveable part is guided on, in each case, one corresponding mating surface on each intermediate body.

4. A probe head according to Claim 3, characterized by the fact that gas bearing or air bearing (18a-c; 38a-d; 134a,b) are arranged between the flat surfaces.

5. A probe head according to Claim 4, characterized by the fact that the intermediate bodies are also guided linearly via air bearing with respect to the stationary part (120a-c) of the probe head, and the feeding of the gas for the gas bearing (134a,b) takes place between the flat surfaces on the moveable part (103) and those on the intermediate body (119a) via channels (131a,b) introduced into the intermediate bodies from the gas bearings which are arranged between the stationary part (120a) and the intermediate bodies (119a).

6. A probe head according to Claim 1, characterized by the fact that at least one additional bearing (8a; 28; 108a) for the moveable part (3; 23; 103) of the probe head is provided which serves for the pre-stressing of the at least three bearings (18a-c; 38a-d; 118a-c) between the moveable part and the the intermediate bodies (19a-c; 39a-d; 119a-c).

7. A probe head according to Claims 3 and 6, characterized by the fact that the pre-stressing of the first at least three bearings is effected by an equal number of further bearings, the further bearings being formed by corresponding surfaces on the moveable part (63) of the probe head (61), said surfaces being parallel to the surfaces of the first bearings.

8. A probe head according to Claim 1, characterized by the fact that the moveable part (43) rests via in each case two points of contact (41/42) on the three intermediate bodies (49a) which are linearly guided independently of each other

9. A probe head according to Claim 1, characterized by the fact that the measurement systems (14a-c; 15a-c; 34a-d/35a-d; 114a-c/115a-c) detect the movement of the intermediate bodies relative to the stationary housing (1, 21, 101) of the probe head.

10. A probe head according to Claim 1, characterized by the fact that force generator (16a-c; 36a-c; 116a-c) for the active drive of the intermediate bodies are provided in the probe head.

11. A probe head according to Claim 10, characterized by the fact that the force generators are compressed-air pistons (16a-c; 36a-d; 116a-c) or moving coils.

12. A probe head according to Claims 9 to 11, characterized by the fact that the measurement systems (114a-c/115a-c) and the force generators (116a-c/120a-c) of each intermediate body are connected in each case into a control circuit and that the characterized of each control circuit can be adjusted separately.

## Revendications

1. Tête de palpeur du type mesureur, par exemple pour appareils de mesure des coordonnées, comprenant une partie qui porte la touche, qui est montée mobile dans toutes les directions de l'espace à l'aide de plusieurs guides, et est associé au système de mesure pour la détection du mouvement de déviation, caractérisée en ce que la partie mobile (3 ; 23 ; 53 ; 63 ; 103) est montée mobile indirectement sur au moins trois corps intermédiaires (19a à c ; 39a à d ; 59a à c ; 68a à c ; 69a à c ; 169a à c) guidés linéairement indépendamment les uns des autres, de telle manière que la position de l'élément mobile puisse être liée de façon univoque à une position déterminée des corps intermédiaires dans tous les mouvements de déplacement.

2. Tête de palpeur selon la revendication 1, caractérisée en ce que les directions de guidage des au moins trois corps intermédiaires sont parallèles entre elles.

3. Tête de palpeur selon la revendication 1, caractérisée en ce que, sur la partie mobile (3 ; 23 ; 103), sont prévues au moins trois surfaces planes orientées en formant des angles entre elles, avec lesquelles la partie mobile est guidée sur une surface conjuguée correspondante de chaque corps intermédiaire.

4. Tête de palpeur selon la revendication 3, caractérisée en ce que, entre les surfaces planes, sont interposées des portées pneumatiques à gaz ou à air (18a à c ; 38a à d ; 134a, b).

5. Tête de palpeur selon la revendication 4, caractérisée en ce que les corps intermédiaires sont eux aussi guidés par des portées pneumatiques par rapport à la partie fixe (120a à c) de la tête de palpeur, et l'alimentation en gaz pour les portées pneumatiques (134a, b) entre les surfaces planes de la partie mobile (103) et celles du corps intermédiaire (119a) est assurée (131a, b) prévus dans les corps intermédiaires, à partir des portées pneumatiques qui sont disposées entre la partie fixe (120a) et les corps intermédiaires (119a),

6. Tête de palpeur selon la revendication 1, caractérisée en ce qu'il est prévu au moins une autre portée (8a, 28, 108a) pour la partie mobile (3 ; 23 ; 103) de la tête de palpeur, portée qui sert pour la précontrainte des au moins trois portées (18a à c ; 38a à d ; 118a à c) interposées entre la partie mobile et les corps intermédiaires (19a à c ; 39a à d ; 119a à c).

7. Tête de palpeur selon les revendications 3 et 6, caractérisée en ce que la précontrainte des premières au moins trois portées est développée par un même nombre d'autres portées, les autres portées étant formées par des surfaces correspondantes situées sur la partie mobile (63) de la tête de palpeur (61), qui sont parallèles aux surfaces des premières portées.

8. Tête de palpeur selon la revendication 1, caractérisée en ce que la partie monile (43) est en appui sur les trois corps intermédiaires (49a) guidés linéairement indépendamment l'un de l'autre, par deux points de contact (41/42) pour chacun des ces corps.

9. Tête de palpeur selon la revendication 1, caractérisée en ce que les systèmes de mesure (14a à c ; 15a à c ; 34a à d/35a à d ; 114a à c/115a à c) captent le mouvement des corps intermédiaires par rapport au boîtier fixe (1, 21, 101) de la tête de palpeur.

10. Tête de palpeur selon la revendication 1, caractérisé en ce que, dans la tête de palpeur, sont prévus des générateurs de force (16a à c ; 36a à d ; 116a à c),pour l'entraînement actif des corps intermédiaires.

11. Tête de palpeur selon la revendication 13, caractérisée en ce que les générateurs de force sont des pistons à air comprimé (16a à c ; 36a à d ; 116a à c) ou des bobines mobiles.

12. Tête de palpeur selon les revendications 9 à 11, caractérisée en ce que les systèmes de mesure (114a à c/115a à c) et les générateurs de force (116a à c/120a à c) de chaque corps intermédiaire sont connectés chacun dans un circuit de réglage et que la caractéristique de chaque circuit de réglage peut être réglée séparément.
